# FASCICULE DE BREVET EUROPEEN

(11) **EP 1 613 516 B1**
(45) Date de publication et mention de la délivrance du brevet: **25.04.2007**
(21) Numéro de dépôt: 04725322.4
(22) Date de dépôt: 02.04.2004
(51) Int. Cl.: B60S 1/58

(54) **PROCEDE ET AGENCEMENT POUR L'ASSEMBLAGE D'UN DISPOSITIF D'ESSUIE-GLACE SUR UN VEHICULE AUTOMOBILE**
VERFAHREN UND VORRICHTUNG ZUR MONTAGE EINER WISCHANLAGE AN EINE FAHRZEUGKAROSSERIE
METHOD AND ARRANGEMENT FOR ASSEMBLING A WINDSCREEN WIPER DEVICE ON A MOTOR VEHICLE

(30) Priorité: 11.04.2003 FR 0304664
(43) Date de publication de la demande: 11.01.2006
(73) Titulaire: VALEO SYSTEMES D'ESSUYAGE, 78321 La Verrière (FR)
(72) Inventeur: PRINCET, Joël, F-86100 Chatellerault (FR); VALLIERE, Jérôme, F-86220 Leugny (FR); BORDAS, Sébastien, F-86100 Chatellerault (FR); MORIN, Pascal, F-86100 Chatellerault (FR); BOISSAC, Jean-Paul, F-86100 Chatellerault (FR); COLLINET, Laurent, F-86270 La Roche Posay (FR); PREDEAU, Serge, F-86100 Chatellerault (FR)
(86) Numéro de dépôt international: PCT/EP2004/003528
(87) Numéro de publication internationale: WO 2004/089707

(56) Documents cités:
- EP-A- 1 348 614
- DE-A- 10 035 476
- FR-A- 2 825 063
- FR-A- 2 827 565
- US-A1- 2003 042 750

## Description

L'invention propose un procédé pour l'assemblage d'un mécanisme d'entraînement d'un dispositif d'essuyage sur un élément de structure de caisse.

L'invention propose plus particulièrement un procédé d'assemblage sur une face interne d'un élément de structure de caisse qui s'étend globalement verticalement à l'arrière d'un véhicule automobile d'un mécanisme d'essuie-glace comportant une platine de support qui porte au moins un arbre d'entraînement d'un balai d'essuyage, d'axe principal longitudinal, à travers une ouverture de l'élément de structure de caisse. Un tel procédé, conforme au préambule de la revendication 1 est décrit dans le document FR 2825063.

Les véhicules automobiles comportent généralement un ouvrant arrière dans lequel est réalisé un évidement qui est obturé par un panneau vitré. Pour nettoyer le panneau vitré, les véhicules comportent un dispositif d'essuyage arrière.

Le dispositif d'essuyage comporte un arbre d'entraînement d'un balai d'essuyage qui est entraîné en rotation par un moteur électrique et qui est guidé en rotation par un palier.

De façon connue, le dispositif d'essuyage est fixé sur une platine qui est elle-même fixée sur une face interne de l'ouvrant par l'intermédiaire d'un assemblage vis-écrou.

Il est nécessaire de prévoir au moins trois points de fixation, de façon à permettre l'immobilisation du dispositif d'essuyage, et à empêcher sa rotation par rapport au panneau vitré.

Le montage de la platine et du dispositif d'essuyage est relativement complexe car il nécessite, d'une part, de positionner la platine par rapport à l'ouvrant selon une translation longitudinale et, d'autre part, de fixer la platine avec le panneau vitré par l'assemblage vis-écrou.

De telles solutions ne sont pas satisfaisantes. En effet, elles sont lourdes, volumineuses, et elles sont relativement longues à réaliser.

Par ailleurs, l'assemblage vis-écrou, nécessite au moins une étape pour réaliser le vissage qui est particulièrement difficile à réaliser puisqu'il faut maintenir la platine en position lors du vissage.

Enfin, l'assemblage par vis-écrou nécessite un positionnement de la platine par rapport au panneau vitré relativement précis, ce qui nécessite l'utilisation d'un outillage spécifique complexe.

Les documents US-A-6.308.372 et WO-A-00.06429 proposent des moyens d'assemblage de la platine par emboîtement élastique et par coopération de formes complémentaires.

L'assemblage s'effectue en insérant un doigt dans un logement complémentaire par une translation longitudinale, puis par une rotation autour d'un axe transversal.

Bien qu'un tel mode de fixation n'utilise pas un assemblage de type vis-écrou, il s'avère peu approprié à un mécanisme d'essuyage associé à l'ouvrant arrière du véhicule du fait de la rotation prévue autour d'un axe transversal.

En effet, puisque l'arbre d'entraînement traverse le panneau vitré, il est nécessaire de prévoir un orifice de grandes dimensions pour permettre le mouvement de l'arbre d'entraînement lors de cette rotation. Cet orifice pose alors des problèmes importants, notamment en ce qui concerne la fermeture étanche de l'orifice.

L'invention a pour but de proposer un procédé pour le montage et la fixation de la platine par coopération de formes complémentaires et qui est particulièrement adapté au montage d'un mécanisme d'essuyage associé à l'ouvrant arrière d'un véhicule.

Dans ce but, l'invention propose un procédé du type d'écrit précédemment, caractérisé en ce que l'étape de positionnement et l'étape de solidarisation consistent chacune en un mouvement de la platine par rapport à l'élément de structure de caisse selon et/ou autour d'une même direction.

Ainsi, l'étape de positionnement s'effectue globalement par une translation selon ladite direction, tandis que l'étape de solidarisation s'effectue par une rotation autour de ladite même direction ou par une translation selon ladite même direction.

Selon d'autres caractéristiques de l'invention :
- ladite direction est parallèle à l'axe longitudinal de l'arbre d'entraînement ;
- les étapes de positionnement et de solidarisation consistent en des mouvements successifs de translation longitudinale d'avant en arrière de la platine par rapport à l'élément de structure de caisse ;
- les étapes de positionnement et de solidarisation consistent successivement en un mouvement de translation longitudinale d'avant en arrière de la platine par rapport à l'élément de structure de caisse, puis en un mouvement de rotation de la platine par rapport à l'élément de structure de caisse, autour de l'axe longitudinal de l'arbre d'entraînement ;
- le procédé comporte une étape finale de verrouillage de la platine en position montée sur la face interne de l'élément de structure de caisse.

L'invention propose aussi un agencement pour le montage et la fixation d'un mécanisme d'essuie-glace suivant un procédé selon l'une quelconque des revendications précédentes, caractérisé en ce que la platine comporte des moyens pour son positionnement coaxialement à l'axe longitudinal de l'arbre d'entraînement et des moyens pour son positionnement angulaire autour de l'axe longitudinal.

Selon d'autres caractéristiques de l'invention :
- la platine comporte un fût cylindrique de section circulaire pour le guidage en rotation de l'arbre d'entraînement, qui est apte à être reçu dans un logement complémentaire de l'élément de structure de caisse pour réaliser le positionnement coaxialement par rapport à l'axe longitudinal, et réaliser l'étanchéité de la traversée de l'élément de structure ;
- la platine ou l'élément de structure de caisse porte un doigt d'orientation longitudinale ou d'orientation radiale par rapport à l'axe longitudinal, qui est reçu dans un logement complémentaire de l'élément de structure de caisse ou de la platine, respectivement, pour le positionnement angulaire de la platine autour de l'axe longitudinal ;
- le doigt est maintenu en position montée dans le logement associé par emboîtement de formes complémentaires, et notamment par emboîtement élastique d'éléments formant aussi amortisseurs de vibrations ;
- l'élément de structure de caisse, ou la platine, porte une pince élastique d'orientation globalement tangentielle à l'axe longitudinal qui reçoit un doigt de la platine, ou l'élément de structure de caisse, respectivement, pour le positionnement angulaire de la platine autour de l'axe longitudinal et pour le maintien en position montée de la platine sur l'élément de structure de caisse ;
- au moins une des branches de la pince comporte un bossage qui fait saillie par rapport à sa face en vis-à-vis de l'autre branche de la pince, vers l'intérieur de la pince, et qui est apte à être reçu dans un logement en creux complémentaire du doigt associé ;
- l'élément de structure de caisse porte une pince élastique qui est apte à recevoir la carcasse extérieure d'un moteur d'entraînement du mécanisme d'essuyage, pour le positionnement angulaire de la platine autour de l'axe longitudinal et pour le maintien de la platine en position montée par rapport à l'élément de structure de caisse ;
- l'élément de structure de caisse comporte une plaque transversale à laquelle est fixée la platine du dispositif d'essuyage ;
- la pince est réalisée venue de matière par pliage et découpage de la plaque ;
- la platine porte au moins une pince dont les branches sont agencées de part et d'autre de la plaque ;
- la platine porte au moins un doigt longitudinal dont la paroi cylindrique extérieure comporte une gorge périphérique, et en ce que le doigt est apte à être introduit dans une rainure de la plaque de manière que, lorsque la platine est en position montée sur la plaque, le bord de la rainure est reçu au moins en partie dans la gorge du doigt ;
- le bord de la rainure comporte des ondulations radiales par rapport à l'axe du doigt, pour réaliser le blocage du doigt en mouvement dans la rainure ;
- doigt porte une patte de verrouillage qui est reçue au moins en partie dans la rainure, pour réaliser un verrouillage du doigt en position dans la rainure ;
- le doigt est agencé radialement à distance de l'axe longitudinal de l'arbre d'entraînement ;
- la pince est d'orientation globalement tangentielle par rapport à l'axe longitudinal ;
- la platine porte une portion qui est apte à être solidarisée à l'élément de structure de caisse par un élément de verrouillage à action axiale, notamment par une vis ;
- l'agencement comporte au moins un doigt d'orientation longitudinale reçu dans un logement complémentaire et des moyens d'immobilisation axiale d'au moins un doigt dans son logement complémentaire.

D'autres caractéristiques et avantages de l'invention apparaîtront à la lecture de la description détaillée qui suit pour la compréhension de laquelle on se reportera aux figures annexées parmi lesquelles :
- les figures 1a à 1c sont des représentations schématiques en perspective, depuis l'avant, d'un agencement conforme à l'invention, dans lequel la platine porte des doigts radiaux qui sont reçus dans des ouvertures tangentielles, et qui représente les étapes successives de montage et de solidarisation de la platine sur l'élément de structure, conformément à l'invention ;
- les figures 2a à 2c sont des vues similaires à celle des figures 1 a à 1 c, dans lesquelles les moyens de solidarisation de la platine comportent une bande formant pince réalisée par découpe et pliage d'une partie de l'élément de structure ;
- les figures 3a à 3c sont des vues similaires à celles des figures 1 a à 1c, dans lesquelles les moyens de solidarisation de la platine comportent des pinces tangentielles qui reçoivent les doigts radiaux ;
- la figure 4 est un détail à plus grande échelle d'un doigt radial et de la pince tangentielle associée ;
- les figures 5a à 5c sont des vues similaires à celles des figures 1 a à 1c, dans lesquelles les moyens de solidarisation de la platine comportent des ensemble de trois doigts radiaux s'étendent depuis l'extrémité libre de chaque bras radial ;
- les figures 6 à 10 sont des détails à plus grande échelle de variantes de réalisation des moyens de solidarisation ;
- les figures 11 a et 11 b sont d'autres détails à plus grande échelle d'un autre mode de réalisation du doigt longitudinal qui comporte une patte de verrouillage ;
- les figures 12a à 12c sont des vues similaires à celles des figures 1a à 1c, dans lesquelles la platine est apte à être solidarisée à l'élément de structure suivant un mouvement de translation vers l'arrière, conformément à un autre aspect de l'invention ;
- la figure 13 est un détail à plus grande échelle des moyens de solidarisation de la platine à l'élément de structure selon le mode de réalisation représenté aux figures 9a à 9c ; et
- la figure 14 est une vue similaire à celle de la figure 14, selon laquelle les moyens de solidarisation comporte une goupille transversale de verrouillage de la solidarisation de la platine à l'élément de structure.

Pour la description de l'invention, on adoptera à titre non limitatif les orientations verticale, longitudinale et transversale selon le repère V, L, T indiqué aux figures.

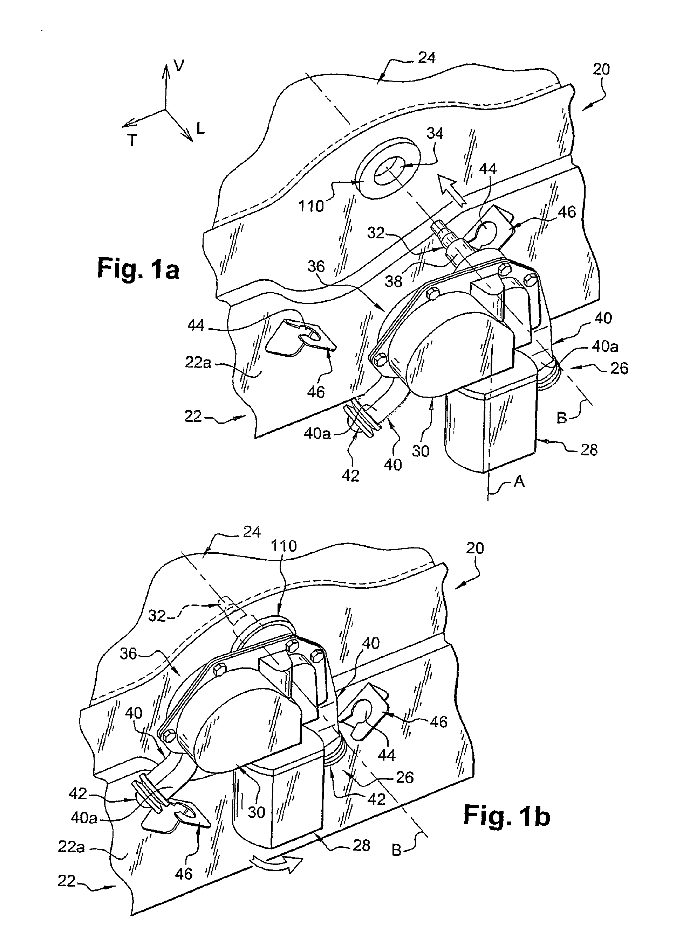

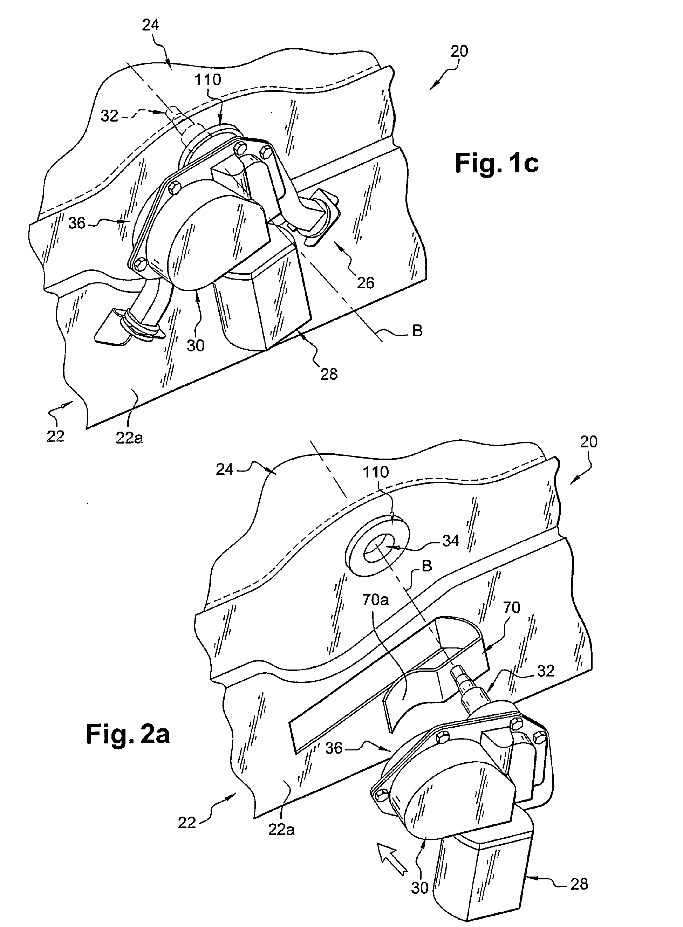

On adoptera aussi l'orientation d'arrière en avant comme étant la direction longitudinale et de gauche à droite en se reportant à la figure 1.

Dans la description qui va suivre, des éléments identiques, similaires ou analogues seront désignés par les mêmes chiffres de référence.

On a représenté aux figures un ouvrant arrière 20 d'un véhicule automobile, notamment un hayon arrière, qui s'étend verticalement transversalement à l'arrière du véhicule, et qui comporte notamment un élément de structure 22, consistant généralement en une tôle mise en forme par découpage et par pliage, et un panneau vitré 24.

L'élément de structure 22 porte sur sa face avant 22a, qui est la face interne de l'ouvrant 20, un mécanisme d'entraînement 26 d'un dispositif d'essuyage de la face externe du panneau vitré 24.

Le mécanisme d'entraînement 26 comporte un moteur d'entraînement 28 dont l'axe principal A s'étend dans un plan vertical transversal, un réducteur 30, un arbre d'entraînement 32 d'axe principal B longitudinal qui s'étend vers l'arrière, en traversant un orifice 34 de l'élément de structure 22.

Le mécanisme d'entraînement 26 comporte aussi une platine 36 de support du moteur 28, du réducteur 30 et de l'arbre d'entraînement 32, qui est fixée sur la face avant 22a de l'élément de structure 22.

La platine peut être un composant individuel, ou bien constituer aussi un des éléments du boîtier du réducteur du moteur, par exemple, la plaque de fermeture du réducteur.

La platine 36 comporte aussi un fût cylindrique 38, pour le guidage en rotation de l'arbre d'entraînement 32 autour de son axe principal longitudinal B, qui est reçu dans l'orifice 34 de l'élément de structure 22.

La fixation de la platine 36 sur la face avant 22a de l'élément de structure 22 s'effectue principalement en deux étapes, à savoir une première étape de positionnement de la platine 36 par rapport à l'élément de structure 22, puis une deuxième étape de solidarisation de la platine sur la face avant 22a de l'élément de structure 22.

Le positionnement de la platine 36 par rapport à l'élément de structure 22 définit la position de la zone essuyée par le balai d'essuyage lors de son mouvement autour de l'axe longitudinal B.

Ainsi,il est nécessaire d'une part de positionnée verticalement et transversalement l'arbre d'entraînement 32, c'est-à-dire l'axe longitudinal B, par rapport à l'élément de structure 22, puis de positionner angulairement et longitudinalement de la platine 36 autour de cet axe longitudinal B.

Le positionnement vertical et transversal de l'arbre d'entraînement 32 est réalisé par l'intermédiaire du fût de guidage cylindrique 38, qui est reçu dans l'orifice 34 de l'élément de structure 22, qui est de formes complémentaires

Ces moyens de positionnement de l'arbre d'entraînement 32, ne sont pas compatibles avec des mouvements de la platine 36par rapport à la face avant 22a de l'élément de structure 22 suivant des directions verticales ou transversales.

C'est pourquoi, conformément à l'invention, les mouvements successifs de la platine 36 par rapport à la face avant 22a de l'élément de structure 22, lors des deux étapes de positionnement et de solidarisation consistent en des mouvements suivant la même direction, qui est ici, selon un mode de réalisation préféré, la direction de l'axe principal longitudinal B de l'arbre d'entraînement 32.

Selon l'invention, comme on l'a représenté aux figures, l'étape de positionnement consiste en un mouvement de translation longitudinal vers l'arrière de la platine 36 par rapport à la face avant 22a, de manière à introduire le fût 38 dans l'orifice 34.

A l'issue de cette étape de positionnement, la platine 36 est positionnée verticalement et transversalement par rapport à l'élément de structure 22, de manière que l'arbre d'entraînement 32 s'étende verticalement et transversalement dans sa position finale.

Selon l'invention, la deuxième étape de solidarisation de la platine sur la face avant 22a de l'élément de structure 22 consiste en un mouvement de rotation de la platine 36 autour de l'axe principal longitudinal B de l'arbre d'entraînement 32.

Ainsi, selon cette deuxième étape, l'arbre d'entraînement 32 n'est pas déplacé verticalement ni transversalement, la deuxième étape a alors uniquement pour fonctions de positionner angulairement le mécanisme d'entraînement 26 autour de l'axe principal longitudinal B.

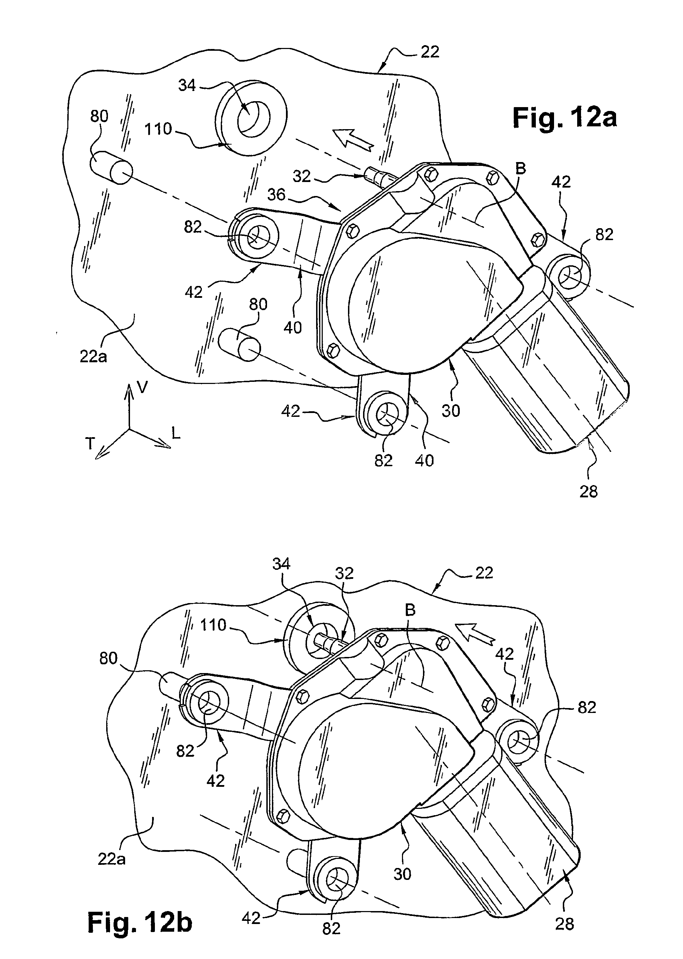

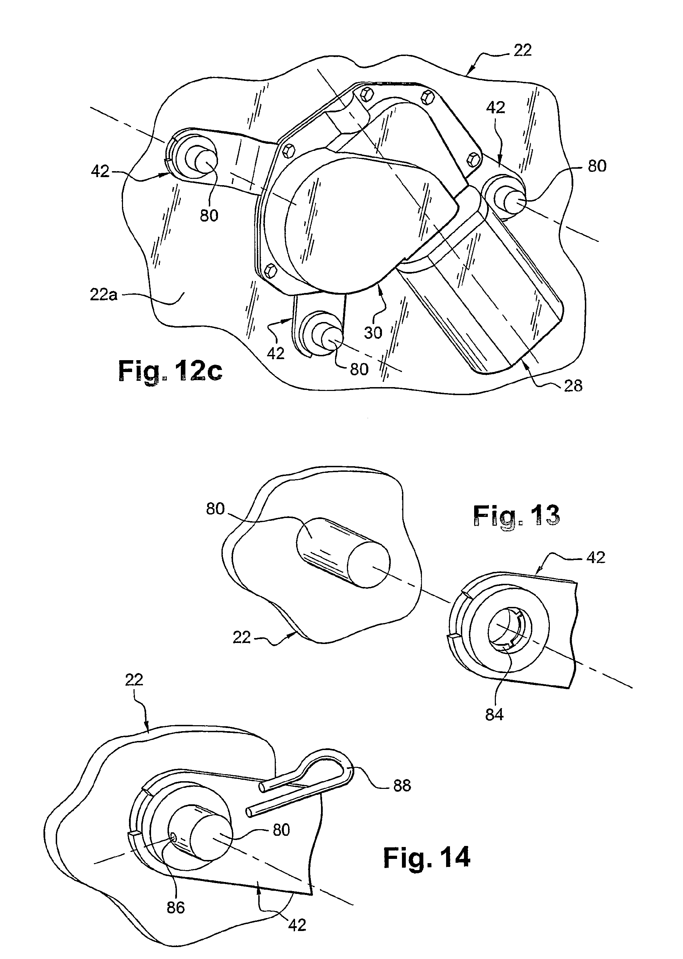

On a représenté aux figures 12a à 12c, 13 et 14, une variante de réalisation de l'invention selon laquelle la deuxième étape de solidarisation de la platine 36 sur la face avant 22a de l'élément de structure 22 consiste en un mouvement supplémentaire de translation longitudinale vers l'arrière de la platine 36, au-delà de la position de la platine 36 à l'issue de la première étape de positionnement.

Selon cette variante de réalisation de l'invention, il n'est pas non plus nécessaire de déplacer verticalement ou transversalement l'arbre d'entraînement 32.

Enfin, selon un autre aspect de l'invention, et quel que soit le mode de réalisation de la deuxième étape de solidarisation de la platine 36 sur la face avant 22a de l'élément de structure 22 est suivie d'une étape finale de verrouillage de la platine 36 en position montée sur la face avant 22a de l'élément de structure 22.

Le positionnement du mécanisme d'entraînement permet de définir la position de la zone de balayage du balai d'essuyage du panneau vitré 24.

Ainsi, il est nécessaire d'une part de positionner l'axe longitudinal B de rotation verticalement et transversalement, et d'autre part, de positionner angulairement le mécanisme d'entraînement 26 autour de cet axe longitudinal B.

Le positionnement de la platine 36 par rapport à la face avant 22a de l'élément de structure 22 est réalisé par l'intermédiaire du fût 38 de la platine 36, qui est reçu dans l'orifice 34 de l'élément de structure 22.

Pour cela, la paroi cylindrique externe 38e du fût 38 est cylindrique, et de section transversale verticale globalement circulaire, et la section de l'orifice 34 est complémentaire à la section de la paroi cylindrique externe 38e du fût 38, c'est-à-dire qu'il est cylindrique d'axe principal longitudinal confondu avec l'axe longitudinal B de l'arbre entraînement 32.

En plus des moyens pour son positionnement par rapport à la face avant 22a de l'élément de structure 22, la platine 36 comporte des moyens pour sa solidarisation avec la face avant 22a de l'élément de structure 22, qui réalisent son positionnement angulaire autour de l'axe B de l'arbre d'entraînement 32, à l'issue de la deuxième étape de solidarisation.

Selon un mode de réalisation préféré de l'invention, et comme on peut le voir aux figures, la solidarisation de la platine 36 sur la face avant 22a de l'élément de structure 22 s'effectue par emboîtement de formes complémentaires.

Selon un premier aspect de l'invention, et comme on l'a dit plus haut, la deuxième étape de solidarisation consiste en un mouvement de rotation de la platine 36 par rapport à la face avant 22a de l'élément de structure 22, autour de l'axe longitudinal B de l'arbre entraînement 32.

Le positionnement angulaire de la platine 36 par rapport à l'élément de structure 22, autour de l'axe longitudinal B, est réalisé par l'intermédiaire de moyens de solidarisation qui sont positionnés, selon un mode de réalisation préféré de l'invention, à distance radialement par rapport à l'axe longitudinal B.

On a représenté aux figures 1 a à 1c un premier mode de réalisation des moyens pour la solidarisation de la platine 36 selon lequel la platine 36 porte deux bras radiaux 40 qui s'étendent chacun globalement radialement par rapport à l'axe longitudinal B, et dont l'extrémité radiale libre 40a porte un doigt radial 42.

Chaque doigt radial 42 est reçu dans une ouverture 44. réalisée dans un élément de support 46 associé, qui est porté par la face avant 22a de l'élément de structure 22.

Ces éléments de support 46 consistent chacun en une plaque de tôle réalisée par découpe et pliage de l'élément de structure 22, et qui s'étend dans un plan longitudinal globalement tangentiel à l'axe longitudinal B.

L'ouverture 44 de chaque élément de support 46 consiste globalement en une rainure qui s'étend globalement tangentiellement par rapport à l'axe longitudinal B, depuis un bord de l'élément de support 46 situé en amont, relativement au mouvement de la deuxième étape de solidarisation, et elle comporte une première portion de largeur inférieure à la largeur du doigt radial 42, et un fond délimitant un logement complémentaire du doigt radial 42.

Ainsi, lorsque le doigt 42 est en position dans le fond de l'ouverture 44, le fait que la première portion de l'ouverture 44 soit de largeur inférieure à celle du doigt 42, empêche toute sortie du doigt 42 en dehors du fond de l'ouverture 44.

Puisque le doigt 42 ne peut sortir du fond de l'ouverture 44, les moyens de solidarisation de la platine 36 avec l'élément de structure 22 réalisent simultanément le maintien en position de la platine 36, son positionnement angulaire autour de l'axe longitudinal B, ainsi que le positionnement longitudinal de la platine 36 par rapport à l'élément de structure 22.

De plus, la platine 36 comporte plusieurs bras radiaux 40, qui sont ici au nombre de deux, pour empêcher tout mouvement de la platine 36 autour d'un axe situé dans un vertical transversal.

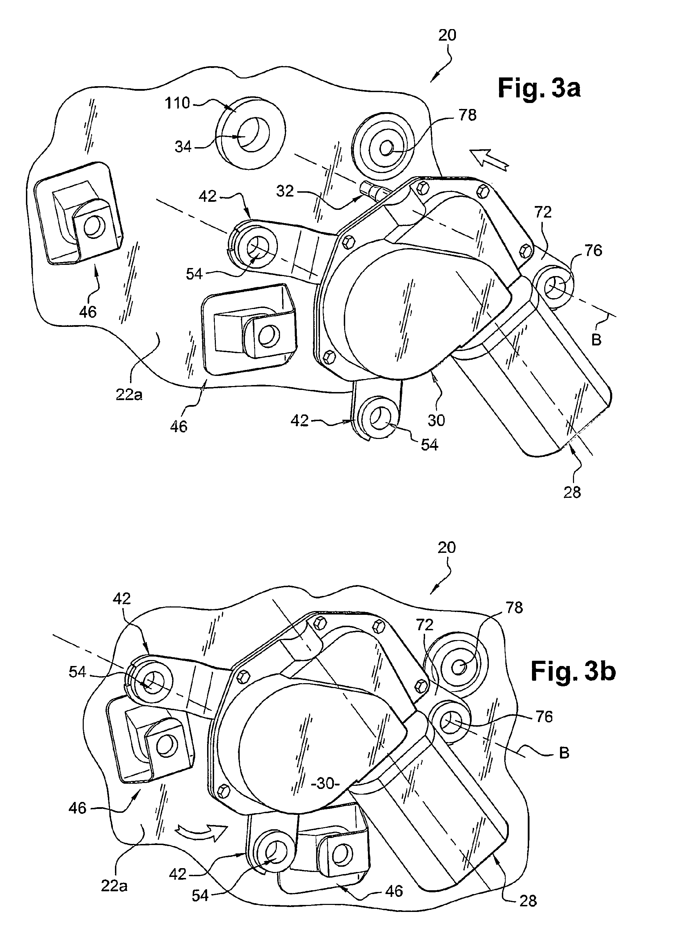

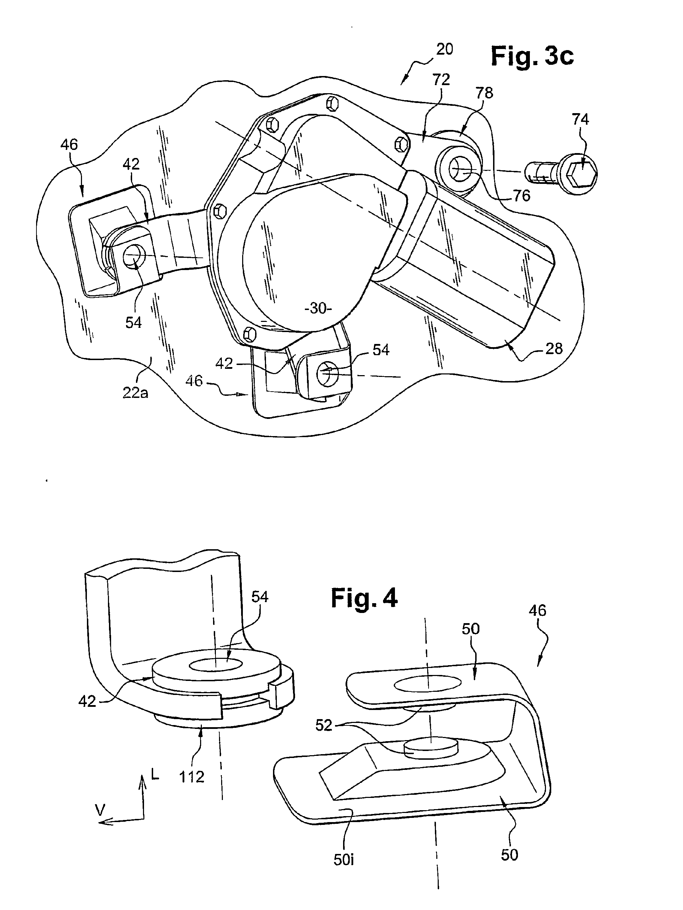

On a représenté aux figures 3a, 3c, 3c et 4, un autre mode de réalisation des éléments de support 46, selon lequel les éléments de support 46 forment une pince élastique en forme de U qui est orientée globalement tangentiellement par rapport à l'axe longitudinal B, et dont les branches 50 s'étendent parallèlement à la face avant 22a de l'élément de structure 22.

Comme on peut le voir plus en détail à la figure 4, chaque branche 50 comporte un bossage 52 qui fait saillie longitudinalement vers l'intérieur de la pince 46, depuis la face interne 50i de la branche 50, en vis-à-vis de l'autre branche 50.

Selon cette même variante, le doigt radial 42 comporte un orifice longitudinal 54 dans lequel le bossage 52 est reçu lorsque la platine 36 est en position montée sur la face avant 22a de l'élément de structure 22, de manière à réaliser le maintien en position de la platine 36.

Au cours de l'étape de solidarisation, chaque élément de support 46 formant pince se déforme élastiquement de manière que ses branches 50 s'écartent, pour permettre le passage du doigt 42 entre les bossages 52, puis une fois que le logement 54 est en vis-à-vis des bossages 52, les branches reviennent élastiquement dans leur position initiale pour laquelle les bossages 52 sont reçus à l'intérieur du logement 54.

Selon un mode de réalisation préféré, les bossages 52 et le logement 54 sont de dimensions complémentaires, de manière à réaliser le positionnement angulaire de la platine 36 autour de l'axe longitudinal B.

De plus, le positionnement longitudinal de la platine 36 par rapport à l'élément de structure 22 est réalisé par le fait que au moins l'une des deux branches 50 de la pince 46 est fixée à l'élément de structure 22.

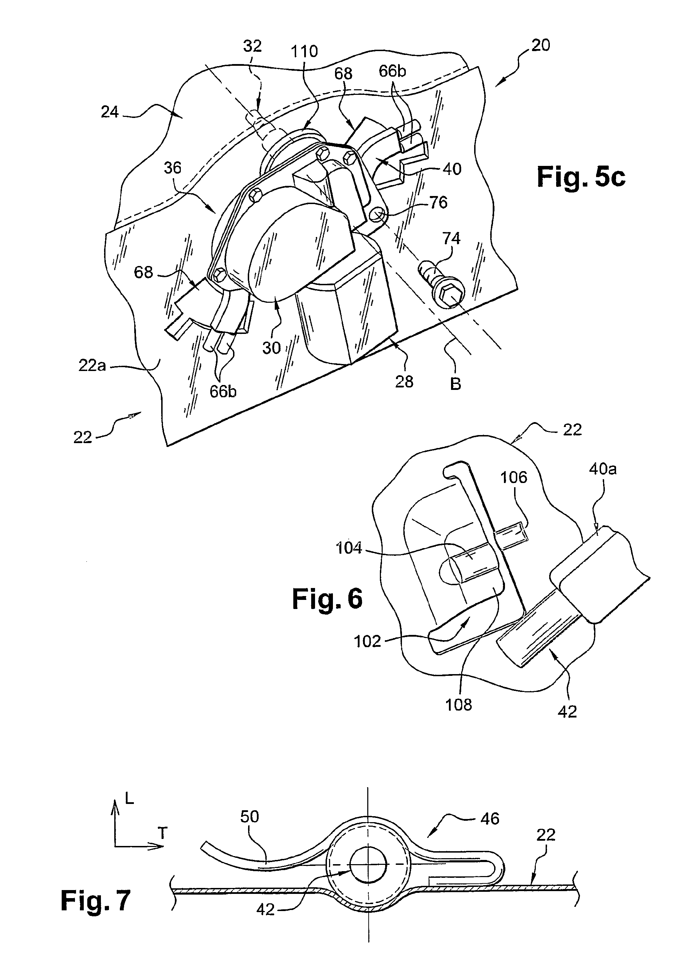

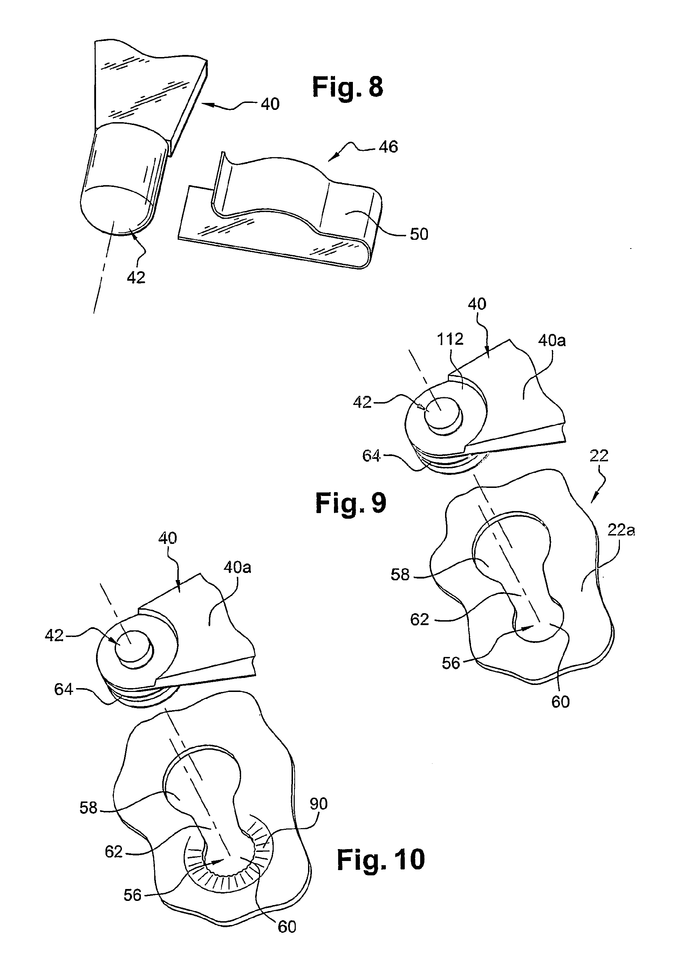

On a représenté aux figures 7 et 8, une variante de réalisation des éléments de supports 46 en forme de pince selon laquelle la branche avant 50 de la pince 46 consiste en un fil ressort ou en une bande qui est soit fixée sur la face avant 22a de l'élément de structure, comme représenté à la figure 7, ou bien qui est réalisée venue de matière avec l'élément de structure 22, ici par découpe et par pliage d'une partie de l'élément de structure 22.

La pince 46 est alors constituée par cette bande de matière 50 et par l'élément de structure 22.

On a représenté à la figure 9 un autre mode de réalisation des moyens de solidarisation de la platine 36 avec la face avant 22a de l'élément de structure 22, selon lequel l'extrémité libre 40a du bras radial 40 porte un doigt 42 qui s'étend longitudinalement, et qui est reçu dans une ouverture 56 réalisée dans la face avant 22a de l'élément de structure 22. La paroi cylindrique extérieure du doigt 42 comporte une gorge radiale périphérique 64, dans laquelle le bord de l'ouverture 56 est reçu en partie.

Cette ouverture 56 comporte un premier orifice 58 globalement circulaire et de diamètre au moins égal au diamètre extérieur du doigt 42, un deuxième orifice 60 de diamètre inférieur au diamètre extérieur du doigt 42, et supérieur au diamètre intérieur de la gorge périphérique 64, et une rainure intermédiaire 62 qui relie les deux orifices 58, 60, et dont la largeur est inférieure au diamètre intérieur de la gorge 64.

Le premier orifice 58 est agencé sur l'élément de structure 22 de manière qu'il s'étende longitudinalement en vis-à-vis du doigt 42 au cours de la première étape de positionnement de la platine par rapport à la face avant 22a de l'élément de structure 22, pour permettre l'insertion du doigt 42 dans l'ouverture 56 pendant la première étape.

De plus, au terme de la première étape de positionnement, la platine 36 est positionnée longitudinalement par rapport à la face avant 22a de l'élément de structure 22 de manière que la gorge 64 du doigt 42 soit située à la même cote longitudinale que l'élément de structure 22, c'est à dire dans le plan de l'orifice 58.

Le deuxième orifice 60 et la rainure intermédiaire 62 sont agencés sur l'élément de structure 22 de manière qu'au cours de la deuxième étape de solidarisation, le doigt 42 se déplace dans la rainure intermédiaire 62, puis pénètre dans le deuxième orifice 60, le bord de la rainure 62 et du deuxième orifice 60 se succédant dans la gorge 64 du doigt 42.

Puisque la largeur de la rainure intermédiaire 62 est inférieure au diamètre du fond de la gorge 64 du doigt 42, lorsque le doigt 42 est en position dans le deuxième orifice, la rainure 62 réalise un blocage du doigt 42 dans le deuxième orifice 60 de l'ouverture 56.

On a représenté à la figure 10 une variante de réalisation de l'ouverture 56, selon laquelle une partie 90 de l'élément de structure 22, qui s'étend à la périphérie du deuxième orifice 60, qui est conformée de manière que, lorsque le doigt 42 est en position dans le deuxième orifice 60, elle réalise en partie le blocage du doigt 42 dans le deuxième orifice 60.

Pour cela, cette partie 90 de l'élément de structure 22, qui a globalement la forme d'un disque coaxial au deuxième orifice 60, comporte des ondulations radiales, relativement à l'axe longitudinal deuxième orifice 60.

Du fait de ces ondulations de la partie 90 de l'élément de structure 22, le bord périphérique du deuxième orifice 60 est ondulé, d'amplitude longitudinale supérieure à la largeur de la gorge 64 du doigt 42. De ce fait, lorsque le doigt 42 est en position dans le deuxième orifice 60, le bord ondulé du deuxième orifice est introduit à force dans la gorge 64 du doigt 42, réalisant de ce fait un blocage supplémentaire du doigt 42 dans le deuxième orifice 60 par frottements.

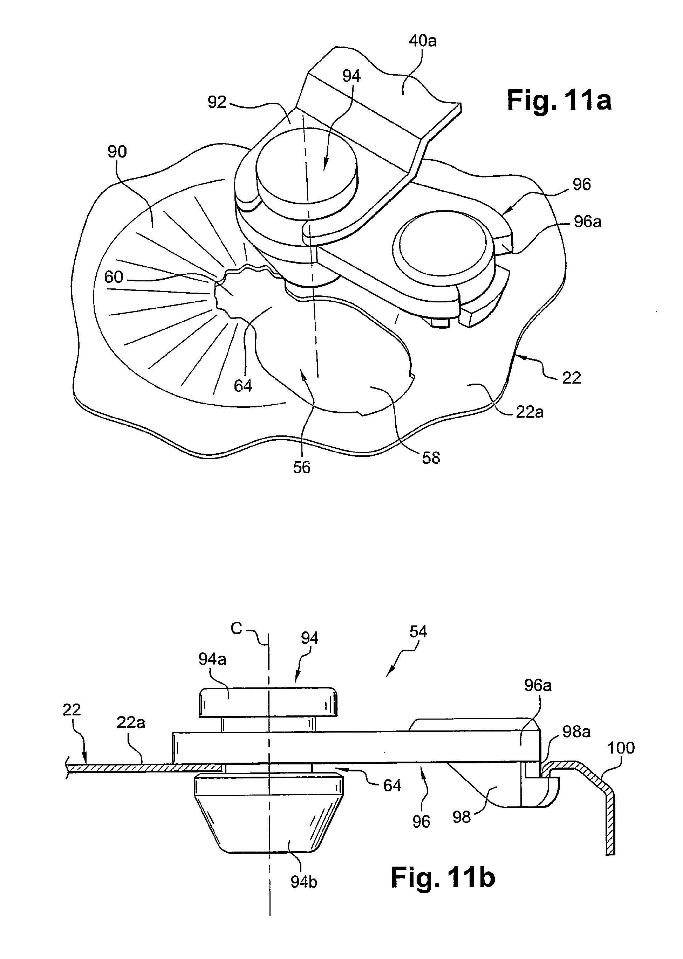

On a représenté aux figures 11a et 11 b, une autre variante de réalisation du doigt 42, qui réalise le verrouillage du doigt 42 en position montée dans l'ouverture 56.

Ici, le doigt 42 consiste en un élément qui est fixé à l'extrémité libre 40a du bras radial 40 par l'intermédiaire d'un crochet 92 agencé à l'extrémité libre 40a du bras radial 40.

Le doigt 42 comporte un corps 94 globalement cylindrique d'axe principal C longitudinal, dont l'extrémité longitudinale avant 94a est fixée au crochet 92 du bras radial 40, et dont l'extrémité longitudinale arrière 94b est reçue dans l'ouverture 56, qui est réalisée conformément à l'un des modes de réalisation décrits précédemment. A cet effet, extrémité arrière 94b comporte la gorge 64 qui reçoit le bord périphérique du deuxième orifice 60.

Le doigt 42 comporte aussi une patte de verrouillage 96, qui s'étend globalement radialement par rapport à l'axe C du corps 94. L'extrémité radiale libre 96a de cette patte de verrouillage comporte une portion 98 en forme de rampe, qui est apte à s'appuyer contre une portion 100 de l'élément de structure 22, elle aussi en forme de rampe, lors de la deuxième étape de solidarisation de la platine 36, c'est-à-dire lorsque le doigt 42 est déplacé tangentiellement par rapport à l'axe longitudinal B dans l'ouverture 56.

Lorsque la portion en forme de rampe 98 de la patte de fixation 96 s'appuie contre la portion 100 de l'élément de structure 22, la patte de fixation 96 se déforme élastiquement vers l'avant puis, lorsque le doigt 42 est en position dans le deuxième orifice 60, la patte de fixation 96 reprend élastiquement sa forme initiale représentée à la figure 11 b, dans laquelle la portion en forme de rampe 98 est reçue dans le premier orifice 58.

Le bord d'extrémité radiale 98a de la portion en forme de rampe 98 vient alors en butée contre le bord en vis-à-vis du premier orifice 58, de manière à empêcher que le doigt 42 ne se déplace de nouveau dans l'ouverture 56, dans un mouvement de désolidarisation.

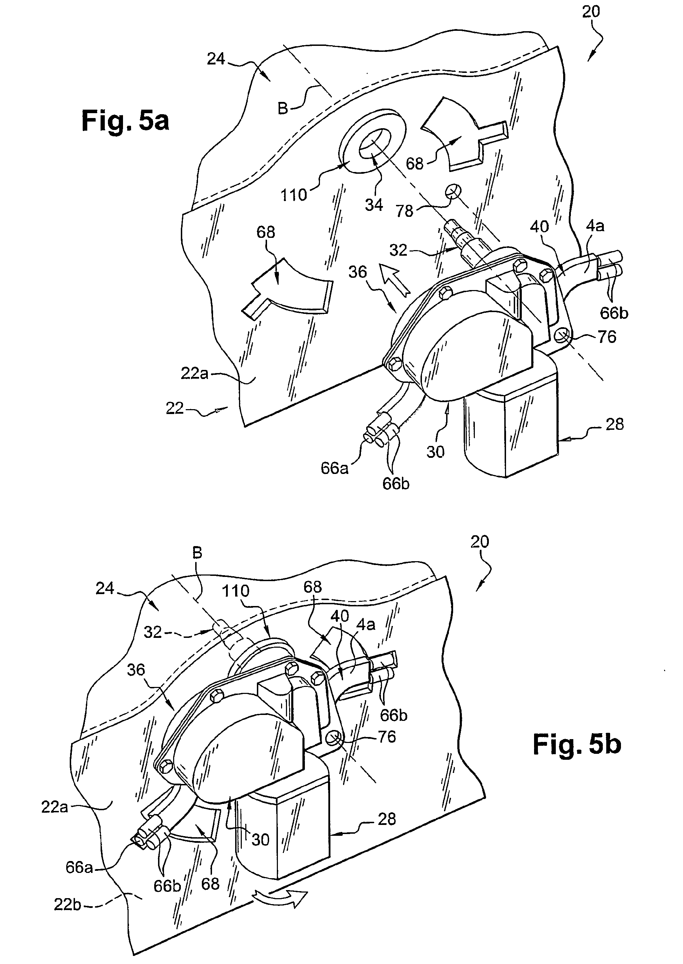

On a représenté aux figures 5a à 5c, un autre mode de réalisation des moyens de blocage selon lequel l'extrémité libre 40a de chaque bras radial 40 porte un ensemble de plusieurs doigts 66 parallèles, et qui s'étendent globalement radialement.

Ces doigts 66 sont agencés de manière qu'à l'issue de la deuxième étape de solidarisation, ils s'étendent de part et d'autre de l'élément de structure 22, en exerçant un effort de serrage longitudinal de l'élément de structure 22.

Cet effort de serrage permet d'une part d'empêcher tout mouvement longitudinal vers l'avant ou vers l'arrière de la platine 36 par rapport à l'élément de structure 22, et d'autre part d'empêcher toute rotation de la platine 36 par rapport à l'élément de structure 22, autour de l'axe longitudinal B par frottements.

Ici, chaque bras radial 40 porte trois doigts radiaux 66 qui sont agencés de manière qu'à l'issue de l'étape de solidarisation, un premier doigt radial 66a s'appuie contre la face arrière 22b de l'élément de structure 22, et les deux autres doigts radiaux 66b s'appuient contre la face avant 22a de l'élément de structure 22.

De plus, l'élément de structure 22 comporte une ouverture 68 associée à chaque bras radial 40, qui permet le passage et le déplacement du premier doigt radial 66a et d'une partie du bras radial 40, en arrière de l'élément de structure 22, au cours des deux étapes de positionnement et de solidarisation de la platine 36 par rapport à l'élément de structure 22.

On a représenté à la figure 6, un autre mode de réalisation des moyens de blocage lequel chaque bras radial 40 porte à son extrémité radiale libre 40a un doigt radial 42, et selon lequel l'élément de structure 22 est conformé par découpe et pliage, de manière qu'il comporte, pour chacun des doigts 42, une première partie avant 102, et une deuxième partie arrière 104.

La première partie 102 comporte une partie plane qui s'étend dans un plan longitudinal vertical situé en avant de la face avant 22a de l'élément de structure 22, et elle comporte une forme en creux 108 qui est bombée vers l'avant. Cette forme en creux 108 est globalement complémentaire de celle du doigt 42, et elle est apte à recevoir l'extrémité radiale libre du doit radial 42, à l'issue de la deuxième étape de solidarisation de la platine 36 à l'élément de structure 22.

La première partie comporte en outre une portion amont 106, relativement au mouvement de rotation de la platine 36 autour de l'axe longitudinal B, qui est déformée longitudinalement vers l'avant, pour permettre introduction du doigt radial 42 entre les deux parties 102, 104.

La deuxième partie 104 consiste en un renforcement vers l'arrière de la face avant 22a de l'élément de structure 22, qui est globalement complémentaire du doigt radial 42.

Ainsi, à l'issue de la deuxième étape de solidarisation de la platine 36 à l'élément de structure 22, le doigt 42 est agencé longitudinalement entre les deux portions en creux 108, 104, qui exercent par ailleurs un effort de serrage sur le doigt 42.

Ainsi, ces portions en creux 108, 104 réalisent le positionnement longitudinal de la platine 36 par rapport à l'élément de structure 22, ainsi que le positionnement angulaire de la platine 36 autour de l'axe longitudinal B.

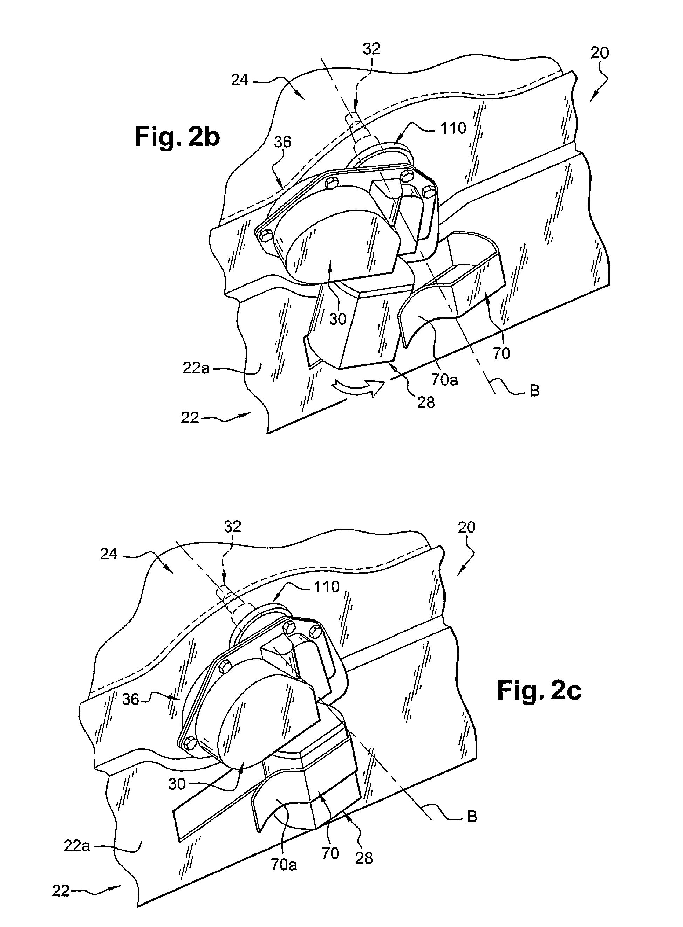

On a représenté aux figures 2a à 2c, un autre mode de réalisation des moyens de solidarisation de la platine 36 par rapport à l'élément de structure 22 selon lequel une bande de matière 70 formant pince, qui est ici réalisée venue de matière avec l'élément de structure 22, par exemple par découpe et pliage, recouvre au moins en partie le corps du moteur 28, pour réaliser le positionnement angulaire de la platine 36 autour de l'axe longitudinal B, ainsi que le blocage angulaire et longitudinal de la platine 36 par rapport à l'élément de structure 22.

Cette bande de matière 70 peut, en variante, consister en un élément ajouté qui est fixé à l'élément de structure 22 par exemple par soudage.

L'extrémité libre 70a de la bande de matière 70, qui s'étend en amont, relativement au mouvement de solidarisation autour de l'axe longitudinal B, est recourbée vers l'avant de manière que lors du mouvement de solidarisation de la platine 36 sur l'élément de structure 22, le moteur 28 s'appuie contre cette extrémité libre 70a, pour provoquer une déformation élastique de la bande de matière 70 et une ouverture de la pince, permettant alors le passage du moteur 28. Lorsque la platine 36 est en position montée par rapport à l'élément de structure 22, la bande de matière 70 revient élastiquement dans sa position de blocage du moteur 28 qu'elle chevauche et entoure intimement sans jeu en assurant une fonction de pince élastique du corps du moteur.

Le véhicule, ainsi que le mécanisme d'entraînement 26, génère des vibrations, du mécanisme d'entraînement 26 par rapport à l'élément de structure 22 d'amplitude et de fréquence diverses.

Ces vibrations peuvent provoquer le déboîtement des moyens de blocage, et ainsi provoquer la désolidarisation de la platine 36 d'avec l'élément de structure 22.

Pour éviter cette désolidarisation, et selon un autre aspect de l'invention, le mécanisme d'entraînement 26 est agencé de manière que son centre de gravité soit décalé transversalement par rapport à l'axe longitudinal B, pour que le mécanisme d'entraînement 26 soit rappelé vers sa position de blocage par l'action de la pesanteur.

Selon encore un autre aspect de l'invention, et comme peut le voir notamment aux figures 3a à 3c, et 5a à 5c, la platine comporte un bras radial supplémentaire 72 dont l'extrémité libre est apte à être solidarisée à l'élément de structure 22 par des moyens autres que par emboîtement élastique de formes complémentaires, pour réaliser un verrouillage de la platine 36 en position montée sur l'élément de structure 22, postérieurement à la deuxième étape de solidarisation.

Ici, comme on peut le voir aux figures, les moyens de verrouillage comportent une vis longitudinale de verrouillage 74 qui traverse un orifice 76 du bras radial supplémentaire 72 et qui coopère avec un taraudage complémentaire 78 de l'élément de structure 22, ou porté par ce dernier.

La vis peut être remplacée par tout élément ou moyen équivalent tel qu'un doigt « clipsable », un rivet, une goupille, etc.

On a décrit plusieurs modes distincts pour réaliser les moyens de solidarisation de la platine 36 avec la face avant 22a de l'élément de structure 22.

Cependant, il sera compris que l'invention s'applique aussi bien à un agencement comportant plusieurs moyens de solidarisation conformes à un seul des modes de réalisation décrits précédemment, qu'à un agencement comportant une association de moyens de solidarisation conformes à différents des modes de réalisation décrits précédemment.

On a représenté aux figures 12a à 12c un exemple de réalisation des moyens de solidarisation de la platine 36 avec l'élément de structure 22 conformément à la variante de réalisation de l'invention selon laquelle le mouvement de la deuxième étape de solidarisation consiste en un mouvement de translation longitudinal vers l'arrière, parallèlement à l'axe longitudinal B.

Selon ce mode de réalisation des moyens de solidarisation, l'élément de structure 22 porte des doigts 80 qui s'étendent longitudinalement vers l'avant depuis la face avant 22a de l'élément de structure 22, et qui sont reçus dans des logements complémentaires 82 des doigts radiaux 42.

Selon ce mode de réalisation, l'élément de structure 22 et la platine 36 comportent plusieurs ensembles de doigts longitudinaux 80 et de logements complémentaires 82, qui sont ici au nombre de trois, répartis angulairement, de manière à réaliser le positionnement angulaire autour de l'axe longitudinal B de la platine 36 par rapport à l'élément de structure 22.

Le verrouillage en position longitudinale de la platine 36 par rapport à l'élément de structure 22 est réalisé par l'intermédiaire d'anneaux d'arrêt extérieurs 84 qui, comme on peut le voir plus en détail à la figure 13, réalisent le blocage en mouvement longitudinal des doigts 80 par arc-boutement sur la surface cylindrique périphérique de ces doigts. Ces anneaux d'arrêt d'axe sont par exemple du type connu sous la dénomination "GRIFFAXE".

A titre de variante de réalisation, les doigts 80 sont réalisés dans un matériau qui se déforme plastiquement sous l'action des anneaux d'arrêt 84. Selon encore une autre variante non représentée, l'extrémité libre des doigts 80 porte une gorge qui reçoit le bord interne de l'anneau d'arrêt 84 associé pour réaliser le blocage longitudinal.

Enfin, pour réaliser le verrouillage en position comme représenté à la figure 14, chaque doigt 80 comporte un orifice transversal 86 qui reçoit une goupille 88.

A titre de variantes non représentées, les moyens de blocage ou d'immobilisation axiale selon la direction longitudinale peuvent être constitués par des dispositifs par emboîtement élastique tels que des « clips élastiques, par exemples portés par les doigts longitudinaux

Selon une variante de réalisation non représentée, les doigts 80 sont portés par les bras radiaux 40 et ils s'étendent longitudinalement vers l'arrière de manière à être reçus dans les logements complémentaires 82 qui sont réalisés dans l'élément de structure 22.

Comme on l'a dit plus haut, le mécanisme d'entraînement 26 génère un grand nombre de vibrations. Ces vibrations, lorsqu'elles sont transmises à l'élément de structure 22 le font vibrer, ce qui provoque du bruit fortement désagréable pour les personnes se trouvant à l'intérieur du véhicule.

C'est pourquoi, comme on peut le voir aux figures, des éléments amortisseurs, réalisés notamment en caoutchouc naturel ou artificiel, sont interposés entre la platine 36 et l'élément de structure 22.

Ces éléments amortisseurs comportent ainsi un premier amortisseur 110 qui est porté par l'élément de structure 22 ou le fut 38, et qui recouvre le bord de l'orifice 34 de l'élément de structure 22, de manière que, lorsque la platine est en position montée sur l'élément de structure 22, le premier amortisseur 110 est interposé entre la face cylindrique externe 38e du fut 38, et le bord de l'orifice 34. En étant réalisé en caoutchouc ou en matériau élastomère, naturel ou synthétique, cet élément amortisseur constitue aussi un organe d'étanchéité. Il permet aussi d'absorber les tolérances de fabrication de la caisse du véhicule.

De la même manière, chaque doigt radial 42 peut être réalisé sous la forme d'un manchon ou d'une douille en matériau déformable élastiquement à la manière d'un silentbloc, réalisé en caoutchouc ou en matériau élastomère, naturel ou synthétique. En outre cette conception de chaque doigt 42, ou des composants équivalents ou analogues selon les divers modes de réalisation, sous la forme d'amortisseurs de vibrations, facilitent l'assemblage selon le procédé de l'invention, lors de l'étape de solidarisation grâce à leur capacité à se déformer élastiquement pour faciliter les divers emboîtements de formes complémentaires.

## Revendications

1. Procédé d'assemblage sur une face interne (22a) d'un élément de structure de caisse (22) qui s'étend globalement verticalement à l'arrière d'un véhicule automobile, d'un mécanisme d'essuie-glace (26) comportant une platine (36) de support
qui comporte successivement une étape de positionnement de la platine (36) de support par rapport à la face interne (22a) de l'élément de structure de caisse (22) et une étape de solidarisation de la platine (36) avec la face interne (22a) de l'élément de structure de caisse (22),
**caractérisé en ce que** l'étape de positionnement et l'étape de solidarisation consistent chacune en un mouvement de la platine (36) par rapport à l'élément de structure de caisse (22) selon et/ou autour d'une même direction.

2. Procédé d'assemblage selon la revendication précédente dans lequel la platine (36) de support porte au moins un arbre d'entraînement (32) d'un balai d'essuyage, d'axe principal (B) longitudinal, à travers une ouverture (34) de l'élément de structure de caisse (22), **caractérisé en ce que** ladite direction est parallèle à l'axe longitudinal (B) de l'arbre d'entraînement (32).

3. Procédé d'assemblage selon la revendication précédente, **caractérisé en ce que** les étapes de positionnement et de solidarisation consistent en des mouvements successifs de translation longitudinale d'avant en arrière de la platine (36) par rapport à l'élément de structure de caisse (22).

4. Procédé d'assemblage selon la revendication 2, **caractérisé en ce que** les étapes de positionnement et de solidarisation consistent successivement en un mouvement de translation longitudinale d'avant en arrière de la platine (36) par rapport à l'élément de structure de caisse (22), puis en un mouvement de rotation de la platine (36) par rapport à l'élément de structure de caisse (22), autour de l'axe longitudinal (B) de l'arbre d'entraînement (32).

5. Procédé d'assemblage selon l'une quelconque des revendications précédentes, **caractérisé en ce qu'**il comporte une étape finale de verrouillage de la platine (36) en position montée sur la face interne (22a) de l'élément de structure de caisse (22).

6. Agencement pour le montage et la fixation d'un mécanisme d'essuie-glace (26) suivant un procédé selon l'une quelconque des revendications précédentes,
**caractérisé en ce que** la platine (36) comporte des moyens pour son positionnement coaxialement à l'axe longitudinal (B) de l'arbre d'entraînement (32) et des moyens pour son positionnement angulaire autour de l'axe longitudinal (B).

7. Agencement selon la revendication précédente, **caractérisé en ce que** la platine (36) comporte un fût cylindrique (38) de section circulaire pour le guidage en rotation de l'arbre d'entraînement (32), qui est apte à être reçu dans un logement complémentaire (34) de l'élément de structure de caisse (22) pour réaliser le positionnement coaxialement par rapport à l'axe longitudinal (B), et réaliser l'étanchéité de la traversée de l'élément de structure.

8. Agencement selon la revendication 6 ou 7, **caractérisé en ce que** la platine (36) ou l'élément de structure de caisse (22) porte un doigt (42) d'orientation longitudinale ou d'orientation radiale par rapport à l'axe longitudinal (B), qui est reçu dans un logement (46) complémentaire de l'élément de structure de caisse (22) ou de la platine (36), respectivement, pour le positionnement angulaire de la platine (36) autour de l'axe longitudinal (B).

9. Agencement selon la revendication précédente, **caractérisé en ce que** le doigt (42) est maintenu en position montée dans le logement (44) associé par emboîtement de formes complémentaires, notamment par emboîtement élastique d'éléments formant aussi amortisseurs de vibrations.

10. Agencement selon la revendication 6 ou 7, **caractérisé en ce que** l'élément de structure de caisse (22), ou la platine (36), porte une pince (46) élastique d'orientation globalement tangentielle à l'axe longitudinal (B), qui reçoit un doigt (42) de la platine (36), ou l'élément de structure de caisse (22), respectivement, pour le positionnement angulaire de la platine (36) autour de l'axe longitudinal (B) et pour le maintien en position montée de la platine (36) sur l'élément de structure de caisse (22).

11. Agencement selon la revendication précédente, **caractérisé en ce que** au moins une des branches (50) de la pince (46) comporte un bossage (52) qui fait saillie par rapport à sa face en vis-à-vis de l'autre branche (50) de la pince (46), vers l'intérieur de la pince (46), et qui est apte à être reçu dans un logement (54) en creux complémentaire du doigt (42) associé.

12. Agencement selon la revendication 6 ou 7, **caractérisé en ce que** l'élément de structure de caisse (22) porte une pince élastique (70) qui est apte à recevoir la carcasse extérieure d'un moteur (28) d'entraînement du mécanisme d'essuyage (26), pour le positionnement angulaire de la platine (36) autour de l'axe longitudinal (B) et pour le maintien de la platine (36) en position montée par rapport à l'élément de structure de caisse (22).

13. Agencement selon l'une quelconque des revendications 6 à 12, **caractérisé en ce que** l'élément de structure de caisse (22) comporte une plaque transversale à laquelle est fixée la platine (36) du dispositif d'essuyage (26).

14. Agencement selon la revendication précédente, en combinaison avec l'une des revendication 9 à 12, **caractérisé en ce que** la pince (46) est réalisée venue de matière par pliage et découpage de la plaque (22).

15. Agencement selon la revendication 13, en combinaison avec la revendication 6, **caractérisé en ce que** la platine (36) porte au moins une pince dont les branches (66) sont agencées de part et d'autre de la plaque (22).

16. Agencement selon la revendication 13, en combinaison avec la revendication 6, **caractérisé en ce que** la platine (36) porte au moins un doigt (42) longitudinal dont la paroi cylindrique extérieure comporte une gorge périphérique (64), et **en ce que** le doigt (42) est apte à être introduit dans une rainure (56) de la plaque de manière que, lorsque la platine (36) est en position montée sur la plaque (22), le bord de la rainure (56) est reçu au moins en partie dans la gorge (64) du doigt (42).

17. Agencement selon la revendication précédente, **caractérisé en ce que** le bord de la rainure (56) comporte des ondulations radiales par rapport à l'axe du doigt (42), pour réaliser le blocage du doigt (42) en mouvement dans la rainure (56).

18. Agencement selon l'une des revendications 16 ou 17, **caractérisé en ce que** le doigt porte une patte de verrouillage (96) qui est reçue au moins en partie dans la rainure (56), pour réaliser un verrouillage du doigt (42) en position dans la rainure (56).

19. Agencement selon l'une quelconque des revendications 8 à 18, **caractérisé en ce que** le doigt (42) est agencé radialement à distance de l'axe longitudinal (B) de l'arbre d'entraînement (32).

20. Agencement selon l'une des revendications 8 à 14, **caractérisé en ce que** la pince (46) est d'orientation globalement tangentielle par rapport à l'axe longitudinal (B).

21. Agencement selon l'une quelconque des revendications 6 à 20, **caractérisé en ce que** la platine (36) porte une portion (76) qui est apte à être solidarisée à l'élément de structure de caisse (22) par un élément de verrouillage à action axiale, notamment par une vis (74).

22. Agencement selon l'une des revendications 8 ou 9, **caractérisé en ce qu'**il comporte au moins un doigt (80) d'orientation longitudinale reçu dans un logement complémentaire (82) et des moyens (84, 86, 88) d'immobilisation axiale d'au moins un doigt dans son logement complémentaire.

## Claims

1. An assembly process on an internal side (22a) of a body structure element (22) extending on the whole vertically at the rear of an automobile of a windscreen wiper mechanism (26) comprising a support plate (36)
which successively comprises a stage of positioning of the support plate (36) in relation to the internal surface (22a) of the body structure element (22) and a stage of securing of the plate (36) to the internal surface (22a) of the body structure element (22),
**characterised by** the fact that the positioning stage and the securing stage each consist of movement of the plate (36) in relation to the body structure element (22) in and/or around the same direction.

2. An assembly process according to the previous claim in which the support plate (36) bears at least one drive shaft (32) of a wiper blade, with a longitudinal main axis (B), through an opening (34) in the body structure element (22), **characterised by** the fact that the aforementioned direction is parallel to the longitudinal axis (B) of the drive shaft (32).

3. An assembly process according to the previous claim, **characterised by** the fact that the positioning and securing stages consist of successive movements of longitudinal translation from front to rear of the plate (36) in relation to the body structure element (22).

4. An assembly process according to claim 2, **characterised by** the fact that the positioning and securing stages consist of successive movements of longitudinal translation from front to rear of the plate (36) in relation to the body structure element (22) and subsequently a movement of rotation of the plate (36) in relation to the structure element (22) around the longitudinal axis (B) of the drive shaft (32).

5. An assembly process according to any of the above claims, **characterised by** the fact that it comprises a final stage of locking of the plate (36) in the mounted position on the internal surface (22a) of the body structure element (22).

6. An arrangement for installation and attachment of a windscreen wiper mechanism (26) by a process according to any of the previous claims,
**characterised by** the fact that the plate (36) comprises means for its positioning coaxially to the longitudinal axis (B) of the drive shaft (32) and means for its angular positioning around the longitudinal axis (B).

7. An arrangement according to the previous claim, **characterised by** the fact that the plate (36) comprises a cylindrical drum (38) of circular section to guide the drive shaft (32) in rotation, which is capable of being received in the additional housing (34) of the body structure element (22) in order to perform positioning coaxially in relation to the longitudinal axis (B) and ensure airtightness of the passage through the structure element.

8. An arrangement according to claim 6 or 7, **characterised by** the fact that the plate (36) or the structure element (22) bears a finger (42) with longitudinal or radial orientation in relation to the longitudinal axis (B), which is received in an additional housing (46) of the body structure element (22) or the plate (36) respectively for angular positioning of the plate (36) around the longitudinal axis (B).

9. An arrangement according to the previous claim, **characterised by** the fact that the finger (42) is maintained in mounted position in the associated housing (44) by interlocking of complementary shapes and particularly by elastic interlocking of elements also forming vibration absorbers.

10. An arrangement according to claim 6 or 7, **characterised by** the fact that the structure element (22), or the plate (36), bears an elastic clip (46) with an overall tangential orientation to the longitudinal axis (B) which receives a finger (42) of the plate (36) or the body structure element (22), respectively, for angular positioning of the plate (36) around the longitudinal axis (B) and for maintenance in the mounted position of the plate (36) on the body structure element (22).

11. An arrangement according to the previous claim, **characterised by** the fact that at least one of the arms (50) of the clip (46) comprises a boss (52) which protrudes in relation to its surface opposite the other arm (50) of the clip (46), towards the inside of the clip (46) and which is capable of being received in the additional hollow housing (54) of the associated finger (42).

12. An arrangement according to claim 6 or 7, **characterised by** the fact that the structure element (22) bears an elastic clip (70) which is capable of receiving the external shell of a drive motor (28) of the wiping mechanism (26), for angular positioning of the plate (36) around the longitudinal axis (B) and for maintenance of the plate (36) in the mounted position in relation to the body structure element (22).

13. An arrangement according to any of claims 6 to 12, **characterised by** the fact that the structure element (22) comprises a transversal plate to which the plate (36) of the wiping device (26) is attached.

14. An arrangement according to the previous claim, in combination with one of claims 9 to 12, **characterised by** the fact that the clip (46) is realised derived from material by folding and cutting of the sheet (22).

15. An arrangement according to claim 13 in combination with claim 6, **characterised by** the fact that the plate (36) bears at least one clip, the arms (66) of which are arranged on either side of the sheet (22).

16. An arrangement according to claim 13, in combination with claim 6, **characterised by** the fact that the plate (36) bears at least one longitudinal finger (42), the external cylindrical wall of which comprises a peripheral throat (64) with the finger (42) being capable of being inserted into a groove (56) of the sheet such that when the plate (36) is in mounted position on the sheet (22), the edge of the groove (56) is received at least in part in the throat (64) of the finger (42).

17. An arrangement according to the previous claim, **characterised by** the fact that the edge of the groove (56) comprises radial undulations in relation to the axis of the finger (42), in order to block the movement of the finger (42) in the groove (56).

18. An arrangement according to one of claims 16 or 17, **characterised by** the fact that the finger bears a locking tab (96) which is received at least in part in the groove (56) in order to lock the finger (42) in position in the groove (56).

19. An arrangement according to any of claims 8 to 18, **characterised by** the fact that the finger (42) is arranged radially at an interval from the longitudinal axis (B) of the drive shaft (32).

20. An arrangement according to one of claims 8 to 14, **characterised by** the fact that the clip (46) is of tangential orientation overall in relation to the longitudinal axis (B).

21. An arrangement according to any of claims 6 to 20, **characterised by** the fact that the plate (36) bears a portion (76) which is capable of being firmly attached to the body structure element (22) by a locking element with axial action, particularly by a screw (74).

22. An arrangement according to one of claims 8 or 9, **characterised by** the fact that is comprises at least one finger (80) of longitudinal orientation received in an additional housing (82) and means (84, 86, 88) of axial immobilisation of at least one finger in its additional housing.

## Patentansprüche

1. Verfahren zum Zusammenbau eines Scheibenwischermechanismus (26) mit einer Trägerplatine (36) auf einer Innenseite (22a) eines Strukturelements der Karosserie (22), das sich insgesamt vertikal zum Heck eines Kraftfahrzeugs erstreckt,
das nacheinander eine Positionierungsstufe der Trägerplatine (36) im Verhältnis zur Innenseite (22a) des Strukturelements der Karosserie (22) und eine Befestigungsstufe der Platine (36) mit der Innenseite (22a) des Strukturelements der Karosserie (22) umfasst,
**dadurch gekennzeichnet, dass** die Positionierungsstufe und die Befestigungsstufe jeweils aus einer Bewegung der Platine (36) im Verhältnis zum Strukturelement der Karosserie (22) gemäß und / oder um eine(r) und dieselbe / derselben Richtung bestehen.

2. Verfahren zum Zusammenbeau gemäß dem vorherigen Anspruch, bei dem die Trägerplatine (26) wenigstens eine Antriebswelle (32) eines Wischblattes mit Hauptachse (B) in Längsrichtung über eine Öffnung (34) des Strukturelements der Karosserie (22) trägt, **dadurch gekennzeichnet, dass** die genannte Richtung parallel zur Längsachse (B) der Antriebswelle (32) verläuft.

3. Verfahren zum Zusammenbau gemäß dem vorherigen Anspruch, **dadurch gekennzeichnet, dass** die Positionierungs- und Befestigungsstufen aus sukzessiven Translationsbewegung der Platine (36) in Längsrichtung von vorne nach hinten im Verhältnis zum Strukturelement der Karosserie (22) bestehen.

4. Verfahren zum Zusammenbau gemäß Anspruch 2, **dadurch gekennzeichnet, dass** die Positionierungs- und Befestigungsstufen sukzessive aus einer Translationsbewegung der Platine (36) in Längsrichtung von vorne nach hinten im Verhältnis zum Strukturelement der Karosserie (22) und dann aus einer Rotationsbewegung der Platine (36) im Verhältnis zum Strukturelement der Karosserie (22) um die Längsachse (B) der Antriebswelle (32) bestehen.

5. Verfahren zum Zusammenbau gemäß einem der vorherigen Ansprüche, **dadurch gekennzeichnet, dass** es eine Endstufe zur Verriegelung der Platine (36) in auf der Innenseite (22a) des Strukturelements der Karosserie (22) angebrachten Position umfasst.

6. Anordnung für die Anbringung und die Befestigung eines Scheibenwischermechanismus (26) nach einem Verfahren gemäß einem der vorherigen Ansprüche,
**dadurch gekennzeichnet, dass** die Platine (26) Mittel für seine Positionierung koaxial zur Längsachse (B) der Antriebswelle (32) und Mittel für seine winkelförmige Positionierung um die Längsachse (B) umfasst.

7. Anordnung gemäß dem vorherigen Anspruch, **dadurch gekennzeichnet, dass** die Platine (36) einen zylindrischen Schaft (38) mit kreisförmigem Querschnitt für die Führung der Antriebswelle (32) in Rotation umfasst, die geeignet ist, in einer komplementären Aufnahme (34) des Strukturelements der Karosserie (22) aufgenommen zu werden zur Realisierung der Positionierung koaxial im Verhältnis zur Längsachse (B) und zur Abdichtung des Durchbruchs des Strukturelements.

8. Anordnung gemäß Anspruch 6 oder 7, **dadurch gekennzeichnet, dass** die Platine (36) oder das Strukturelement der Karosserie (22) einen Finger (42) mit Ausrichtung in Längsrichtung oder mit radialer Ausrichtung im Verhältnis zur Längsachse (B) trägt, der in einer komplementären Aufnahme (46) jeweils des Strukturelements der Karosserie (22) oder der Platine (36) zur winkelförmigen Positionierung der Platine (36) um die Längsachse (B) aufgenommen wird.

9. Anordnung gemäß dem vorherigen Anspruch, **dadurch gekennzeichnet, dass** der Finger (42) in der in der durch Einrasten komplementärer Formen, insbesondere durch elastisches Einrasten ebenfalls Vibrationsstoßdämpfer bildender elastischer Elemente zugeordneten Aufnahme (44) angebrachten Position beibehalten wird.

10. Anordnung gemäß Anspruch 6 oder 7, **dadurch gekennzeichnet, dass** das Strukturelement der Karosserie (22) oder die Platine (36) eine elastische Klemme (46) von insgesamt tangentialer Ausrichtung zur Längsachse (B) trägt, die jeweils einen Finger (42) der Platine (36) oder das Strukturelement der Karosserie (22) zur winkelförmigen Positionierung der Platine (36) um die Längsachse (B) und zur Beibehaltung der angebrachten Position der Platine (36) auf dem Strukturelement der Karosserie (22) aufnimmt.

11. Anordnung gemäß dem vorherigen Anspruch, **dadurch gekennzeichnet, dass** wenigstens einer der Zweige (50) der Klemme (46) einen Buckel (52) trägt, der im Verhältnis zu seiner Seite gegenüber dem anderen Zweig (50) der Klemme (46) zur Innenseite der Klemme (46) hervorsteht und der geeignet ist, in einer hohlen, zum zugeordneten Finger (42) komplementären Aufnahme (54) aufgenommen zu werden.

12. Anordnung gemäß Anspruch 6 oder 7, **dadurch gekennzeichnet, dass** das Strukturelement der Karosserie (22) eine elastische Klemme (70) trägt, die geeignet ist, den äußeren Unterbau eines Antriebsmotors (28) des Wischermechanismus (26) zur winkelförmigen Positionierung der Platine (36) um die Längsachse (B) und für die Beibehaltung der Platine (36) in der angebrachten Position im Verhältnis zum Strukturelement der Karosserie (22) aufzunehmen.

13. Anordnung gemäß Anspruch 6 bis 12, **dadurch gekennzeichnet, dass** das Strukturelement der Karosserie (22) eine transversale Platte umfasst, an der die Platine (36) der Wischervorrichtung (26) befestigt ist.

14. Anordnung gemäß dem vorherigen Anspruch in Verbindung mit einem der Ansprüche 9 bis 12, **dadurch gekennzeichnet, dass** die Klemme (46) durch Falzen und Ausschneiden aus der Platte (22) aus einem Stück damit realisiert wird.

15. Anordnung gemäß Anspruch 13 in Verbindung mit Anspruch 6, **dadurch gekennzeichnet, dass** die Platine (36) wenigstens eine Klemme trägt, deren Zweige (66) auf jeder Seite der Platte (22) angeordnet sind.

16. Anordnung gemäß Anspruch 13 in Verbindung mit Anspruch 6, **dadurch gekennzeichnet, dass** die Platine (36) wenigstens einen Finger (42) in Längsrichtung trägt, dessen zylindrische Außenwand eine peripherische Auskehlung (64) umfasst und dass der Finger (42) geeignet ist, in eine Rille (56) der Platte derart eingeführt zu werden, dass, wenn die Platine (36) sich in angebrachter Position auf der Platte (22) befindet, der Rand der Rille (56) wenigstens teilweise in der Auskehlung (64) des Fingers (42) aufgenommen wird.

17. Anordnung gemäß dem vorherigen Anspruch, **dadurch gekennzeichnet, dass** der Rand der Rille (56) im Verhältnis zur Achse des Fingers (42) radiale Wellen zur Realisierung der Blockierung des Fingers (42) in Bewegung in der Rille (56) umfasst.

18. Anordnung gemäß Anspruch 16 oder 17, **dadurch gekennzeichnet, dass** der Finger eine Verriegelungsklaue (96) trägt, die wenigstens teilweise zur Realisierung einer Verriegelung des Fingers (42) in der Position in der Rille (56) in der Rille (56) aufgenommen wird.

19. Anordnung gemäß Anspruch 8 bis 18, **dadurch gekennzeichnet, dass** der Finger (42) radial entfernt von der Längsachse (B) der Antriebswelle (32) angeordnet ist.

20. Anordnung gemäß Anspruch 8 bis 14, **dadurch gekennzeichnet, dass** die Klemme (46) eine insgesamt tangentiale Ausrichtung im Verhältnis zur Längsachse (B) aufweist.

21. Anordnung gemäß Anspruch 6 bis 20, **dadurch gekennzeichnet, dass** die Platine (36) einen Abschnitt (76) trägt, der zur festen Befestigung mit dem Strukturelement der Karosserie (22) durch ein Verriegelungselement mit axialer Aktion, insbesondere durch eine Schraube (74), geeignet ist.

22. Anordnung gemäß Anspruch 8 oder 9, **dadurch gekennzeichnet, dass** sie wenigstens einen in einer komplementären Aufnahme (82) aufgenommenen Finger (80) mit Ausrichtung in Längsrichtung und Mittel zur axialen Feststellung (84, 86, 88) wenigstens eines Fingers in seiner komplementären Aufnahme umfasst.
